## Europäisches Patentamt
## European Patent Office
## Office européen des brevets

(19)

(11) Numéro de publication: **0 165 180**
**B1**

(12) # FASCICULE DE BREVET EUROPÉEN

(45) Date de publication du fascicule du brevet:
**29.04.87**

(51) Int. Cl.⁴: **C 01 B 15/037**, C 23 F 1/16,
C 23 G 1/02, C 01 B 15/047

(21) Numéro de dépôt: **85420071.4**

(22) Date de dépôt: **24.04.85**

(54) **Stabilisation de solutions aqueuses acides contenant du peroxyde d'hydrogène et des ions métalliques.**

(30) Priorité: **04.05.84 FR 8407174**

(43) Date de publication de la demande:
**18.12.85 Bulletin 85/51**

(45) Mention de la délivrance du brevet:
**29.04.87 Bulletin 87/18**

(84) Etats contractants désignés:
**AT BE CH DE FR GB IT LI LU NL SE**

(56) Documents cité:
**FR-A-2 123 276**
**FR-A-2 513 258**

(73) Titulaire: **ATOCHEM, 4 & 8, Cours Michelet La Défense 10, F-92800 Puteaux (FR)**

(72) Inventeur: **Pralus, Christian, 3 rue des Gasses, F-69450 St- Cyr au Mont d'Or (FR)**

## Description

La présente invention concerne la stabilisation du peroxyde d'hydrogène en solution aqueuse acide contenant des ions métalliques.

Le ou les acides présents dans de telles solutions peuvent être partiellement sous forme de sels.

De telles solutions trouvent une application notamment dans le traitement de surface des métaux, comme le décapage, le polissage et l'attaque chimiques des aciers inoxydables ou du cuivre, ou dans la fabrication du peroxyde hydraté d'uranium.

Ces solutions sont instables aussi bien lors de leur mise en oeuvre, qu'au repos, les ions métalliques qu'elles renferment catalysant la décomposition du peroxyde d'hydrogène.

Des remèdes ont été proposés pour réduire la vitesse de cette décomposition du peroxyde d'hydrogène au sein de solutions du même type.

Par exemple, le brevet britannique n° 1 164 347 propose l'addition d'un ou plusieurs alcools aliphatiques saturés à une solution aqueuse de peroxyde d'hydrogène contenant de l'acide fluorhydrique, employée pour le polissage chimique du cuivre et de ses alliages.

Le brevet des Etats-Unis d'Amérique n° 3 537 926 préconise l'addition d'un acide aromatique carboxylique ou dicarboxylique, tel que l'acide benzoïque, aux solutions aqueuses acides contenant du peroxyde d'hydrogène et du bifluorure d'ammonium HF, $NH_4F$ employées pour le polissage des alliages de fer.

La demande de brevet japonais, Japan Kokaï n° 73.52 638 revendique l'addition d'urée et d'un acide inorganique aux solutions aqueuses de peroxyde d'hydrogène contenant de l'acide fluorhydrique ou ses sels, mises en oeuvre pour le polissage du fer et des aciers.

La demande de brevet français n° 81.17757 publiée sous le numéro 2 513 258 préconise l'emploi d'amino-3-triazole-1,2,4 pour stabiliser des solutions aqueuses de peroxyde d'hydrogène contenant des ions métalliques et un ou plusieurs acides le cas échéant, tels que l'acide sulfurique et l'acide phosphorique.

Les remèdes énoncés ci-dessus pour améliorer la stabilité de telles solutions présentent l'inconvénient d'être encore insuffisamment efficaces et/ou d'avoir des conséquences néfastes pour l'environnement.

La présente invention pallie ces inconvénients et fournit un procédé pour améliorer la stabilité du peroxyde d'hydrogène en solution aqueuse acide contenant des ions métalliques, le ou les acides présents pouvant être partiellement sous forme de sels, consistant à ajouter à ladite solution de l'amino-3-triazine-1,2,4 en quantité allant jusqu'à 2 g/l, le plus souvent jusqu'à 1 g/l de solution.

Les concentrations respectives de peroxyde d'hydrogène et du ou des acides dans les solutions aqueuses auxquelles s'applique l'invention sont celles habituellement définies pour les solutions de ce type servant au traitement de surface des métaux ou à la préparation du peroxyde hydraté d'uranium. Généralement, la concentration du peroxyde d'hydrogène dans de telles solutions peut s'élever à 150 grammes par litre, celle du ou des acides ne dépassant généralement pas 300 g/l.

Les acides accompagnant le plus fréquemment le peroxyde d'hydrogène dans les solutions concernées par l'invention sont l'acide sulfurique, l'acide phosphorique et l'acide fluorhydrique.

Les exemples ci-dessous, donnés à titre non limitatif, illustrent l'invention.

### EXEMPLE 1

A une solution aqueuse contenant, à côté de 1 % en poids de peroxyde d'hydrogène, de l'acide fluorhyrique correspondant à 38,7 g/l de fluor total, 5,1 g/l de fer total, 1 g/l de chrome total, 0,03 g/l de manganèse total, 0,02 g/l de nickel total et 0,003 g/l de cuivre total, et pour laquelle la vitesse moyenne de décomposition du peroxyde d'hydrogène, déterminé à 40°C sur un intervalle de 1 heure, est de 0,53 millimole par minute et par litre, on ajoute de l'amino-3-triazine 1,2,4 de façon à avoir 1 g de ce composé par litre de solution. La vitesse moyenne de décomposition du peroxyde d'hydrogène, mesurée comme ci-dessus est 0,12 millimole par minute et par litre, donc environ 4,5 fois moindre que celle constatée sans addition du stabilisant.

### EXEMPLE 2

A une solution aqueuse contenant, à côté de 1 % en poids de peroxyde d'hydrogène, de l'acide fluorhydrique correspondant à 45,2 g/l de fluor total, 14,5 g/l de fer total, 3,9 g/l de chrome total, 0,07 g/l de manganèse total, 0,04 g/l de nickel total et 0,007 g/l de cuivre total, pour laquelle la vitesse moyenne de décomposition de l'eau oxygénée, mesurée comme dans l'exemple 1, est de 0,93 millimole par minute et par litre, on ajoute de l'amino-3-triazine-1,2,4 de façon à avoir 0,1 g de ce composé par litre de solution.

La vitesse moyenne de décomposition du peroxyde d'hydrogène, déterminée comme dans l'exemple 1, n'est plus alors que de 0,34 millimole par minute et par litre, c'est-à-dire environ trois fois moins que celle constatée sans addition du stabilisant.

### EXEMPLE 3

En procédant comme dans l'exemple 2 mais en présence de 1 g/l d'amino-3-triazine-1,2,4, la vitesse moyenne de décomposition du peroxyde d'hydrogène, mesurée comme dans l'exemple 1, n'est plus que de 0,14 millimole par minute et par litre de solution, soit 6 fois moins que celle constatée en l'absence du stabilisant.

**EXEMPLE 4**

A une solution aqueuse contenant, à côté de 1 % en poids de peroxyde d'hydrogène, 40,4 g/l d'acide fluorhydrique libre, 65,9 g/l de fer total, 12,9 g/l de chrome total, 0,67 g/l de manganèse total, 0,2 g/l de nickel total et 0,04 g/l de cuivre total, pour laquelle la vitesse moyenne de décomposition de l'eau oxygénée, mesurée comme dans l'exemple 1, est de 2,6 millimoles par minute et par litre, on ajoute de l'amino-3-triazine-1,2,4 de façon à avoir 1 g de ce composé par litre de solution.

La vitesse moyenne de décomposition du peroxyde d'hydrogène, déterminée comme dans l'exemple 1, n'est plus alors que de 0,58 millimole par minute et par litre, c'est-à-dire environ 4,6 fois moins que celle constatée sans addition du stabilisant.

A titre comparatif l'emploi dans les mêmes conditions d'amino-3-triazole-1,2,4 ne procure qu'un effet deux fois inférieur à celui du stabilisant selon l'invention.

**EXEMPLE 5**

En procédant comme dans l'exemple 4 mais à une température de 26° C, la vitesse moyenne de décomposition du peroxyde d'hydrogène est de 0,09 millimole par minute et par litre en présence de 1 g/l d'amino-3-triazine-1,2,4 tandis qu'elle est 8 fois plus forte à cette température en l'absence du stabilisant.

**EXEMPLE 6**

A une solution aqueuse contenant, à côté de 10 % en poids de peroxyde d'hydrogène, de l'acide fluorhydrique correspondant à 43,7 g/l de fluor total et 16,8 g/l de cuivre total, on ajoute de l'amino-3-triazine-1,2,4 de façon à avoir 1 g de ce composé par litre de solution. 67 % du peroxyde d'hydrogène initialement présent dans la solution sont décomposés après 20 heures à 40° C tandis que, dans les mêmes conditions ce pourcentage de décomposition est atteint déjà après 6 heures en l'absence de stabilisant.

**EXEMPLE 7**

A une solution aqueuse contenant, à côté de 10 % en poids de peroxyde d'hydrogène, 185 g/l d'acide sulfurique et 33,6 g/l d'acide phosphorique, on ajoute de l'amino-3-triazine-1,2,4 de telle façon à avoir 1 g de ce composé par litre de solution. Après 20 heures à 40° C, 8,5 % du peroxyde d'hydrogène initialement présent dans la solution sont décomposés tandis que le même taux de décomposition est atteint en 2 heures en l'absence du stabilisant.

**EXEMPLE 8**

Pour assurer la précipitation pratiquement quantitative de l'uranium sous forme de peroxyde hydraté dans un milieu aqueux acide, il est nécessaire de procéder en présence d'un excès de peroxyde d'hydrogène et d'éviter la décomposition de ce dernier.

Afin d'illustrer l'effet stabilisant de l'amino-3-triazine-1,2,4 au cours d'une telle opération, la décomposition du peroxyde d'hydrogène présent à une concentration de 2 % en poids dans un milieu aqueux de pH égal à 3,5 et renfermant, sous forme de sels, 53 mg/l de manganèse, 16 mg/l d'uranium, 4,5 mg/l de molybdène, 2 mg/l de cuivre, 0,8 mg/l de fer et 0,1 mg/l de chrome, a été suivie à 40° C en présence de 1 g de stabilisant par litre d'un tel milieu.

La vitesse moyenne de décomposition du peroxyde d'hydrogène déterminée comme dans l'exemple 1 est seulement de 0,1 millimole par minute et par litre de solution au lieu de 0,9 millimole par minute et par litre en l'absence du stabilisant.

A titre de comparaison, l'effet de l'amino-3-triazole-1,2,4 est deux fois plus faible que celui de l'amino-3-triazine-1,2,4 à quantité égale de stabilisant mis en oeuvre.

**Revendications**

1. Procédé pour améliorer la stabilité du peroxyde d'hydrogène en solution aqueuse acide contenant des ions métalliques, consistant à ajouter à ladite solution de l'amino-3-triazine-1,2,4 en quantité allant jusqu'à 2 grammes par litre de solution.

2. Procédé selon la revendication 1 caractérisé en ce que l'amino-3-triazine-1,2,4 est ajouté à une solution aqueuse acide contenant au plus 150 grammes par litre de peroxyde d'hydrogène et au moins un acide minéral en quantité inférieure à 300 grammes par litre.

3. Procédé selon l'une des revendications 1 et 2 caractérisé en ce que l'acidité de la solution aqueuse de peroxyde d'hydrogène est due à la présence d'au moins un acide choisi parmi l'acide sulfurique, l'acide phosphorique et l'acide fluorhydrique.

4. Procédé selon l'une des revendications caractérisé en ce que l'amino-3-triazine-1,2 ajouté à une solution dans laquelle l'acide trouve partiellement sous forme de sels

5. Solutions aqueuses acides contenant du peroxyde d'hydrogène et des ions métalliques et au moins un acide pouvant être partiellement sous forme de sels, stabilisées par un procédé selon l'une des revendications 1 à 4.

6. Application des solutions aqueuses de la revendication 5 au décapage, au polissage et à l'attaque chimiques des métaux.

7. Application des solutions aqueuses de la revendication 5 dans un stade de précipitation de l'uranium sous forme de peroxyde hydraté à l'aide d'un excès de peroxyde d'hydrogène.


**Patentansprüche**

1. Verfahren zur Verbesserung der Stabilität von Wasserstoffperoxid in saurer, wässriger Lösung, die Metallionen enthält, das darin besteht, daß man zu der genannten Lösung 3-Amino-1,2,4-triazin in einer Menge bis zu 2 g/l Lösung zusetzt.

2. Verfahren nach Anspruch 1, dadurch gekennzeichnet, daß das 3-Amino-1,2,4-triazin zu einer sauren wässrigen Lösung gegeben wird, die höchstens 150 g/l an Wasserstoffperoxid und mindestens eine Mineralsäure in einer Menge unter 300 g/l enthält.

3. Verfahren nach Anspruch 1 oder 2, dadurch gekennzeichnet, daß die Acidität der wässrigen Wasserstoffperoxidlösung auf die Gegenwart mindestens einer Säure zurückzuführen ist, die ausgewählt wird unter Schwefel-, Phosphor- und Fluorwasserstoffsäure.

4. Verfahren nach einem der Ansprüche 1 bis 3, dadurch gekennzeichnet, daß das 3-Amino-1,2,4-triazin zu einer Lösung zugegeben wird, in der die Säure teilweise in Form von Salzen vorliegt.

5. Nach einem Verfahren gemäß einem der Ansprüche 1 bis 4 stabilisierte saure wässrige Lösungen, die Wasserstoffperoxid, Metallionen und mindestens eine Säure enthalten, die teilweise in Form von Salzen vorliegen kann.

6. Verwendung von wässrigen Lösungen gemäß Anspruch 5 zum Abbeizen, Polieren und zum Ätzen von Metallen.

7. Verwendung von wässrigen Lösungen gemäß Anspruch 5 bei einer Stufe zur Fällung von Uran in Form von wasserhaltigem Peroxid mit Hilfe eines Überschusses von Wasserstoffperoxid.


**Claims**

1. Process for improving the stability of hydrogen peroxide in acidic aqueous solution containing metal ions, consisting in adding to the said solution 3-amino-1,2,4-triazine in an amount ranging up to 2 grammes per litre of solution.

2. Process according to Claim 1, characterized in that the 3-amino-1,2,4-triazine is added to an acidic aqueous solution containing at most 150 grammes per litre of hydrogen peroxide and at least one inorganic acid in an amount less than 300 grammes per litre.

3. Process according to one of Claims 1 and 2, characterized in that the acidity of the aqueous solution of hydrogen peroxide is due to the presence of at least one acid chosen from sulphuric acid, phosphoric acid and hydrofluoric acid.

4. Process according to one of Claims 1 to 3, characterized in that the 3-amino-1,2,4-triazine is added to a solution in which the acid is present partially in the form of salts.

5. Acidic aqueous solutions containing hydrogen peroxide and metal ions and at least one acid which can be partially in the form of salts, the solutions being stabilized by a process according to one of Claims 1 to 4.

6. Application of the aqueous solutions of Claim 5 to the pickling, polishing and chemical attack of metals.

7. Application of the aqueous solutions of Claim 5 in a stage of precipitation of uranium in the form of hydrated peroxide by means of an excess of hydrogen peroxide.